# EUROPÄISCHE PATENTSCHRIFT

(11) **EP 0 955 121 B1**
(45) Veröffentlichungstag und Bekanntmachung des Hinweises auf die Patenterteilung: **14.08.2002**
(21) Anmeldenummer: 99106290.2
(22) Anmeldetag: 16.04.1999
(51) Int. Cl.: B23K 33/00

(54) **Anordnung zur Verbindung eines Leichtmetallbauteils mit einem Stahlbauteil und Verfahren zur Herstellung der Anordnung**
Arrangement for connecting a light metal component to a steel component and method for manufacturing the arrangement
Agencement pour joindre une pièce en alliage léger à une pièce en acier et procédé de fabrication de l'agencement

(30) Priorität: 07.05.1998 DE 19820393
(43) Veröffentlichungstag der Anmeldung: 10.11.1999
(73) Patentinhaber: Volkswagen Aktiengesellschaft, 38436 Wolfsburg (DE)
(72) Erfinder: Thürnau, Frank, 31535 Neustadt (DE)

(56) Entgegenhaltungen:
- DE-C- 4 240 822
- DE-C- 4 240 823
- US-A- 4 119 827
- US-A- 5 655 792

## Beschreibung

Die vorliegende Erfindung betrifft eine Anordnung zur Verbindung eines Leichtmetallbauteils mit einem Stahlbauteil unter Zuhilfenahme eines sich teilweise zwischen diesen beiden erstreckenden Zusatzteils, das mit einem der beiden Bauteile verschweißt und an dem anderen der beiden Bauteile über geeignete Verbindungsmittel befestigt ist, sowie ein Verfahren zur Herstellung der Anordnung.

Ein wesentlicher Parameter insbesondere für Fahrleistung und Kraftstoffverbrauch eines Kraftfahrzeugs ist dessen Gesamtgewicht. Daher wird im Kraftfahrzeugbau seit einiger Zeit auf konsequente Leichtbauweise gesetzt, wobei neben der geometrischen Gestaltung einzelner Konstruktionselemente auch durch eine geeignete Materialauswahl ein günstiges Festigkeits-/Gewichtsverhältnis erreicht werden kann.

Aus den genannten Gründen finden zunehmend Leichtmetallteile - insbesondere aus Aluminium, Magnesium und/oder deren Legierungen - im Kraftfahrzeugbau Verwendung, da sich damit eine deutliche Gewichtsreduzierung gegenüber der Verwendung von Stahlteilen erzielen läßt, ohne größere Nachteile bei der formgebenden und umformenden Bearbeitung in Kauf nehmen zu müssen.

Fahrzeugkarosserien werden in der Regel aus Gründen der Festigkeit aber insbesondere aus Wirtschaftlichkeitsüberlegungen nicht vollständig in Leichtmetall gefertigt, so daß in vielen Fällen Stahlblech mit Leichtmetall zu verbinden ist. Neben reibschlüssigen Schraub- und Nietverbindungen ist es gerade bei großflächigen Blechteilen wünchenswert, diese zu verschweißen, da letzteres Verfahren kostengünstig voll- oder teilautomatisiert werden kann und zu Verbindungen mit hoher Festigkeit führt.

Stand der Technik ist, Aluminiumblech am Rand mit Stahlblech zu versehen, so daß das gesamte Bauteil in üblicher Weise zum Beispiel punktverschweißt werden kann.

Aus der DE 42 40 822 C1, die eine Anordnung der eingangs genannten Art beschreibt, ist bekannt, ein flächiges Aluminiumbauteil am Rand mit einem U-förmigen Stahlblechprofil zu verkleben, beziehungsweise einen Stahlblechstreifen mit dem Aluminiumbauteil zu verfalzen und innerhalb der Falz zusätzlich zu verkleben. Das so in seinem Randbereich mit Stahlblech versehene Aluminiumbauteil kann nun in bekannter Weise mit Stahlblechteilen verschweißt, zum Beispiel punktverschweißt werden.

Nachteilig an der zuvor beschriebenen Anordnung ist, daß das Aluminiumbauteil in seinem Randbereich starr mit einem Material mit anderen Werkstoffkennwerten verbunden ist, wodurch zum Beispiel Oberflächenbehandlungen wie eine kathodische Tauchbadlackierung (KTL), bei denen eine Erhitzung des Bauteils notwendig ist, zu einem Verziehen des Bauteils führen können. Betriebsbedingte Spannungen zwischen Aluminiumbauteil und Stahlbauteil führen bei der zuvor beschriebenen Lösung aufgrund der größeren Steifigkeit von Stahl gegenüber Aluminium zu Verformungen des Aluminiumbauteils, wobei diese insbesondere bei wenig verwindungssteifen großflächigen Bauteilen, z.B. Kraftfahrzeugdächern, zu gut sichtbaren und daher aus Gründen der Ästhetik unerwünschten Effekten führen.

Schließlich wird durch die US-A-5655792 zur Verhinderung einer galvanischen Korrosion zwischen Bauteilen unterschiedlicher Metalle, hier die Verbindung zwischen Eisen und Aluminium, die Verwendung eines Zusatzteils und eines Verbindungsmittels offenbart, wobei das Zusatzteil und das Verbindungsmittel, ein sogenanntes Bi-metall bildend, miteinander fest verbunden sind. Im Wesentlichen wird das Bi-metall, respektive der Eisenteil desselben mit einem Stahlbauteil durch Schweißen verbunden. Ferner wird vorgeschlagen den Aluminiumteil des Bi-metalls entweder durch Schweißen oder mittels mechanischer Verbindungsmittel mit einem Aluminiumbauteil zu verbinden. Als nachteilig ist jedoch herauszustellen, daß insbesondere durch die Verschweißung des Eisenteils des Bi-metalls mit dem Stahlbauteil hohe Temperaturen in die Gesamtkonstruktionen eingeleitet werden, die ihrerseits zu den bereits oben beschriebenen Spannungen und demzufolge zu nachteiligen Verformungen des Aluminiumbauteils führen, die es gerade im Kraftfahrzeugbau zu vermeiden gilt.

Das der Erfindung zugrunde liegende Problem ist es, eine Anordnung zur Verbindung zwischen einem Leichtmetallbauteil und einem Stahlbauteil der eingangs genannten Art bereitzustellen, bei der unerwünschte Verformungen des Leichtmetallbauteils zumindest weitgehend vermeidbar sind.

Diese Aufgabe wird erfindungsgemäß dadurch gelöst, daß das Zusatzteil aus Leichtmetall oder einer Leichtmetalllegierung besteht, mit dem Leichtmetallbauteil verschweißt und an dem Stahlbauteil durch an sich bekannte mechanisch wirkende Verbindungsmittel, wie Nieten, Schrauben, Clinch-Verbindungen, befestigt ist, wobei der Abstand zwischen der Schweißnaht und dem gewählten Verbindungsmittel ein Vielfaches der Stärke des Zusatzteils beträgt.

Durch vorstehende Maßnahmen, insbesondere auch durch die Wahl eines geeigneten Abstandes zwischen der Schweißnaht zur Verbindung beider Leichtmetallteile und dem bzw. den Verbindungsmittel(n) zwischen Zusatzteil und Stahlbauteil, in der Regel ein Vielfaches der Materialstärke der zu verbindenden Bauteile, kann erreicht werden, daß Spannungsverformungen zumindest im wesentlichen nur in dem Zusatzteil auftreten.

Die Verbindung des Zusatzteils mit dem Stahlbauteil kann bevorzugt durch Vernieten, hier wiederum bevorzugt durch Stanznieten erfolgen, ebenso sind jedoch alternativ auch andere reib- oder formschlüssige Verbindungen möglich, wie zum Beispiel Verschrauben und/oder Verclinchen (Durchsetzfügen, Druckfügen). Die erfindungsgemäße Anordnung eignet sich insbesondere zum Verbinden großflächiger Leichtmetallbauteile, insbesondere wenn diese in ihrer Formgebung von einem flachen Blech abweichen, mit einer Stahlkonstruktion, wie dies zum Beispiel bei der Verbindung eines Leichtmetall-Formdachs einer Fahrzeugkarosserie mit einem Seitenteil der Fahrzeugkarosserie, die in der Regel aus Stahlblech gefertigt ist, der Fall ist.

Bei dem Verschweißen des Leichtmetallbauteils mit dem Zusatzteil gelangt vorzugsweise ein Laser-Schweißverfahren zum Einsatz. Durch die hohe örtliche Energiedichte bei der Herstellung der Laser-Schweißnaht kann die Temperatureinflußzone der Schweißnaht gering gehalten werden, wodurch das Stahlbauteil nicht oder zumindest kaum in Mitleidenschaft gezogen wird.

Zur Verbesserung der mechanischen Eigenschaften der Fügestelle, aber insbesondere als Hilfsmittel in der Fertigung, kann das Zusatzteil mit dem Stahlbauteil zusätzlich flächig verklebt sein.

Weiterhin ist es vorteilhaft, die Verbindungsstelle zusätzlich mit einer Dichtungsmasse gegen Korrosion zu schützen und zu versiegeln. Die Dichtungsmasse kann auch zusätzlich als Klebstoff wirken, bzw. ein Klebstoff kann zusätzlich eine Abdichtfunktion ausüben.

Ein Verfahren zur Herstellung der erfindungsgemäßen Anordnung wird vorteilhaft in den Verfahrensschritten Vernieten, Verschrauben und/oder Verclinchen (Durchsetzfügen, Druckfügen) des Zusatzteils mit dem Stahlbauteil, danach eventuell Verkleben des Zusatzteils mit dem Leichtmetallbauteil, und sodann Verschweißen des Leichtmetallbauteils mit dem Zusatzteil durchgeführt.

Es ist natürlich auch möglich, zuerst das Leichtmetallbauteil mit dem Zusatzbauteil zu verschweißen (eventuell mit zusätzlicher Verklebung), und anschließend das Zusatzteil mit dem Stahlbauteil zu vernieten, verschrauben und/oder verclinchen.

Die erfindungsgemäße Anordnung und das erfindungsgemäße Verfahren eignen sich für alle Fälle, in denen Leichtmetall (zum Beispiel Aluminium, Magnesium und/oder deren Legierungen) mit Stahl zu verbinden ist, sind aber besonders vorteilhaft bei der Verbindung von großflächigen Leichtmetallbauteilen geringer Stärke mit Stahlbauteilen.

Im folgenden wird ein Ausführungsbeispiel der Erfindung unter Bezugnahme auf die beiliegende Zeichnung näher beschrieben:

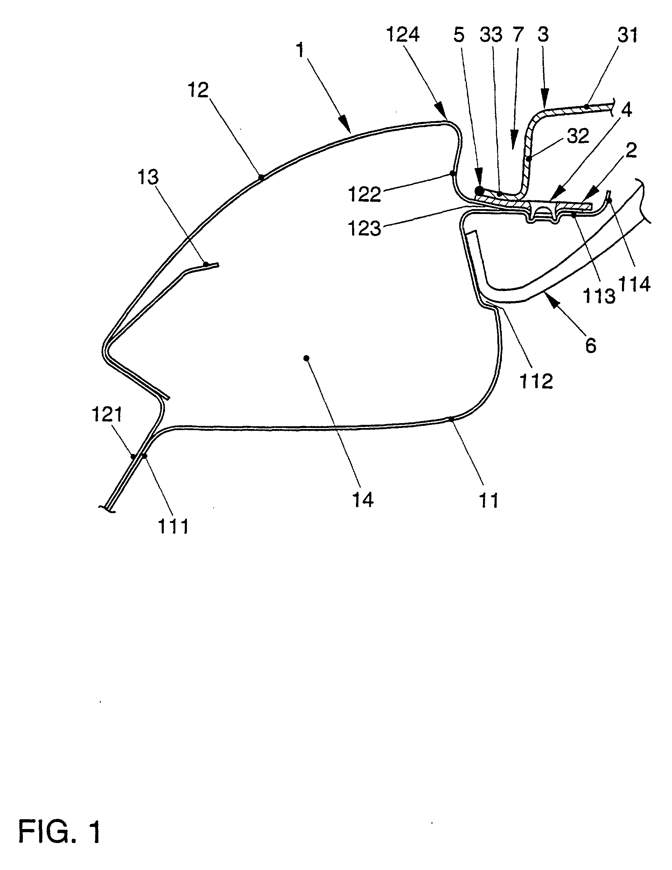

Die einzige Fig. 1 zeigt dabei einen Querschnitt durch einen oberen Abschnitt eines Stahl-Seitenteils einer Fahrzeugkarosserie im Bereich des Übergangs vom Seitenteil zum Dach.

Das abgebildete Ausführungsbeispiel eines oberen Abschnitts eines Seitenteils 1 einer PKW-Karosserie besteht aus einem inneren Seitenprofilblech 11 aus Stahlblech sowie einem äußeren Seitenprofilblech 12 aus Stahlblech. Inneres und äußeres Seitenprofilblech 11, 12 bilden im in Fig. 1 gezeigten Bereich des Übergangs vom Seitenteil 1 zum Fahrzeugdach 3 zusammen einen rohrartigen Hohlkörper 14 zur Verbesserung der Biegesteifigkeit in Fahrzeugquerrichtung. Das äußere Seitenprofilblech 12 kann an seiner Innenseite im Bereich eines etwa 90° nach außen hin verlaufenden Blechabschnitts eine Verstärkungseinlage 13 aufweisen. Das innere Seitenprofilblech 11 besitzt einen unteren Verbindungsbereich 111 mit der dieses z.B. punktverschweißt ist mit einem unteren Verbindungsbereich 121 des äußeren Seitenprofilblechs 12. Das innere Seitenprofilblech 11 verläuft von dem unteren Verbindungsbereich 111 im wesentlichen ausgebeult zum Fahrzeuginneren hin zu einem zweiten Verbindungsbereich 113 mit dem äußeren Seitenprofilblech 12, welches im wesentlichen zum Fahrzeugäußeren hin ausgebeult ist. Das innere Seitenprofilblech 11 verläuft von dem Verbindungsbereich 111 etwa waagerecht in Richtung auf das Fahrzeuginnere, knickt sodann in etwa senkrecht nach oben ab, um wiederum ungefähr waagerecht als innere Dachaufnahmezunge 113 zum Fahrzeuginneren hin zu verlaufen. In dem etwa senkrecht nach oben verlaufenden Blechabschnitt ist eine Formhimmelaufnahme 112 als nutähnliche Vertiefung eingelassen.

Das äußere Seitenprofilblech 12 knickt oberhalb des unteren Verbindungsbereichs 121 mit dem inneren Seitenprofilblech 11 in etwa rechtwinklig nach außen hin verlaufend ab, um sodann etwa rechtwinklig zur Dachoberseite hin abzuknicken und in einem im wesentlichen viertelkreisförmigen Bogen in Richtung auf die Fahrzeuginnenseite zu verlaufen. Am Ende dieses Bogens ist das äußere Seitenprofilblech 12 nach unten in Richtung auf die Fahrzeughimmelaufnahme 112 des inneren Seitenprofilblechs 11 umgebogen. Das Seitenteil 1 bildet hier in Einbaulage eine obere Seitenteilkante 124 als Oberkante der gesamten Baugruppe. Eine durch die Abbiegung nach unten gebildete, in etwa senkrecht nach unten verlaufende Blechzunge 122 knickt auf Höhe der inneren Dachaufnahmezunge 113 parallel zu dieser ab und liegt als äußere Dachaufnahmezunge 123 teilweise flächig in Fahrzeuglängsrichtung an dieser an. Die innere Dachaufnahmezunge 113 überragt die äußere Dachaufnahmezunge 123 in Richtung zum Fahrzeuginneren, wobei der überstehende Blechteil nach oben hin als Dichtnase 114 abgebogen ist.

Auf der äußeren Dachaufnahmezunge 123 ist eine Leichtmetallleiste 2 aus Aluminiumblech angeordnet, welche in Fahrzeuglängsrichtung die gesamte äußere Dachaufnahmezunge 123 überdeckt. Leichtmetallleiste 2, äußere Dachaufnahmezunge 123 sowie innere Dachaufnahmezunge 113 können mit Stanznieten 4 miteinander verbunden werden, wobei äußere und innere Dachaufnahmezunge 123, 113 miteinander punktverschweißt sein können. Die Stanznieten 4 sind entlang der Fahrzeuglängsrichtung an mehreren Stellen angeordnet, ihr Abstand zueinander entspricht dem üblicher Nietverbindungen. Es besteht weiterhin die Möglichkeit die Leichtmetallleiste 2 an der äußeren Dachaufnahmezunge 123 und/oder an der inneren Dachaufnahmezunge 113 anzuschrauben und/oder anzuclinchen.

Ein Leichtmetalldach 3 aus Aluminiumblech, bestehend aus einer Dachoberfläche 31 sowie einem an den Seitenrändern senkrecht nach unten gezogenen Haltesteg 32, welcher in seinem unteren Bereich nach außen hin als Befestigungsflansch 33 abgeknickt ist, ist mit dem Seitenteil 1 über die Leichtmetallleiste 2 verbunden. Der Befestigungsflansch 33 ist dazu so nach außen hin abgeknickt, daß im Verbindungsbereich mit der Leichtmetallleiste 2 eine Auflagefläche entsteht. Die senkrechte Blechzunge 122 des äußeren Seitenprofilblechs 12 sowie der Haltesteg 32 des Leichtmetalldachs 3 sind in ihren Dimensionierungen so ausgelegt, daß ein optisch glatter Übergang vom äußeren Seitenprofilblech 12 zur Dachoberfläche 31 vorhanden ist. Die mit Abstand zueinander verlaufenden senkrechte Blechzunge 122 und Haltesteg 32 bilden zusammen mit dem Befestigungsflansch 33 bzw. der äußeren Dachaufnahmezunge 123 eine U-förmige Dachnut 7, die zum Beispiel durch eine Zierleiste abgedeckt werden kann.

Der Befestigungsflansch 33 ist mit der Leichtmetallleiste 2 an dessen äußerer Kante längs einer Schweißnaht 5 verschweißt, z.B. durch ein Laser-, Elektronenstrahl- oder Schutzgasschweißverfahren. Die Tiefe der Schweißnaht wird bevorzugt so gewählt, daß der Werkstoff des äußeren Seitenprofilblechs 12 keine Gefügeveränderung oder thermisch bedingten Verzug erfährt. Die der Fahrzeugaußenseite zugewandte Stoßkante der Fügestelle des Befestigungsflansches 33 mit der Leichtmetallleiste 2 kann mit einer Dichtmasse insbesondere gegen eindringendes Wasser versiegelt werden. Als Montagehilfe und zur Erhöhung der Festigkeit der Verbindung kann Klebstoff oder Klebefolie auf die Auflagefläche zwischen Leichtmetallleiste 2 und Befestigungsflansch 33 eingebracht werden, wobei auch hier als Klebstoff ein Scheibenkleber oder Klebstoffe der Marken AMV 167 oder Sieker Power 430 verwendet werden können.

Ein Formhimmel 6 ist in bekannter Art und Weise zwischen den Seitenteilen 1 beider Fahrzeugseiten eingeklemmt, wobei die Formhimmelaufnahme 112 für eine sichere Befestigung sorgt.

Entsprechend der hier dargestellten Verbindung des Leichtmetalldachs mit den Seitenteilen 1 kann dieses im Front- und Heckbereich mit den dortigen Karosseriebaugruppen (z. B. Scheibenquerträgern bzw. -rahmen) verbunden sein.

Zur Fertigung werden bevorzugt zunächst das innere Seitenprofilblech 11, das äußere Seitenprofilblech 12 sowie die Verstärkungseinlage 13 miteinander zum Seitenteil 1 verschweißt. Die Leichtmetallleiste 2 wird danach mit dem Seitenteil 1 mittels Stanznieten 4 verbunden und/oder verschraubt und/oder verclincht. Das so gefertigte Seitenteil 1 wird wie üblich an der Fahrzeugkarosserie angebracht. Vor der Montage des Leichtmetalldachs 3 wird gegebenenfalls die Leichtmetallleiste 2 und/oder die Unterseite des Befestigungsflansches 33 mit Klebefolie bzw. Klebstoff versehen. Danach wird der Befestigungsflansch 33 positioniert und mit der Leichtmetallleiste 2 verschweißt. Die der Fahrzeugaußenseite zugewandte Stoßkante der Fügestelle des Befestigungsflansches 33 mit der Leichtmetallleiste 2 kann nun gegebenenfalls mit einer Dichtmasse versiegelt werden.

## Patentansprüche

1. Anordnung zur Verbindung eines Leichtmetallbauteils (3) mit einem Stahlbauteil (1) unter Zuhilfenahme eines sich teilweise zwischen diesen beiden erstreckenden Zusatzteils (2), das mit einem der beiden Bauteile (1, 3) verschweißt und an dem anderen der beiden Bauteile (1, 3) über Verbindungsmittel (4) befestigt ist,
**dadurch gekennzeichnet, daß**
das Zusatzteil (2) aus Leichtmetall oder einer Leichtmetalllegierung besteht, mit dem Leichtmetallbauteil (3) verschweißt und an dem Stahlbauteil (1) durch an sich bekannte mechanisch wirkende Verbindungsmittel (4), wie Nieten, Schrauben, Clinch-Verbindungen, befestigt ist, wobei der Abstand zwischen der Schweißnaht (5) und dem gewählten Verbindungsmittel (4) ein Vielfaches der Stärke des Zusatzteils (2) beträgt.

2. Anordnung nach Anspruch 1,**dadurch gekennzeichnet, daß** als Verbindungsmittel (4) in Anwendung gebrachte Nieten Stanznieten sind.

3. Anordnung nach Anspruch 1, **dadurch gekennzeichnet, daß** das Zusatzteil (2) mit dem Leichtmetallbauteil (3) zusätzlich mittels einem adhäsiv wirkenden Verbindungsmittel (4) in Form eines Klebstoffes flächig verbunden ist.

4. Anordnung nach Anspruch 3, **dadurch gekennzeichnet, daß** der verwendete Klebstoff vorzugsweise ein Klebstoff der Marken AMV 167 oder Sieker Power 430, oder ein Scheibenkleber ist.

5. Anordnung nach einem der vorhergehenden Ansprüche, **dadurch gekennzeichnet, daß** das Leichtmetallbauteil (3) ein Kraftfahrzeug-Formdach ist.

6. Anordnung nach einem der vorhergehenden Ansprüche, **dadurch gekennzeichnet, daß** das Stahlbauteil (1) ein Seitenteil (1) eines Kraftfahrzeugs ist.

7. Anordnung nach einem der vorhergehenden Ansprüche, **dadurch gekennzeichnet, daß** das Zusatzteil (2) mit dem Leichtmetallbauteil (3) mittels einer Laser-Schweißnaht verschweißt ist.

8. Anordnung nach einem der Ansprüche 6 und 7, **dadurch gekennzeichnet, daß** das Zusatzteil (2) als schmales Blech ausgeführt ist, das sich in Fahrzeuglängsrichtung entlang einer Dachaufnahmezunge (123) des Seitenteils (1) erstreckt.

9. Anordnung nach einem der Ansprüche 6 bis 8, **dadurch gekennzeichnet, daß** das Zusatzteil (2) als schmales Blech ausgeführt ist, das sich in Fahrzeugquerrichtung entlang einer Aufnahmefläche erstreckt.

10. Anordnung nach einem der vorhergehenden Ansprüche, **dadurch gekennzeichnet, daß** die Verbindungsfuge zwischen Zusatzteil (2) und Leichtmetallbauteil (3) mit einer Dichtungsmasse versiegelt ist.

11. Verfahren zur Herstellung einer Anordnung nach Anspruch 1, **gekennzeichnet durch** folgende Verfahrensschritte:
- das Stahlbauteil (1) und das Zusatzteil (2) werden **durch** Vernieten, Verschrauben und/oder Verclinchen miteinander verbunden;
- sodann wird das Leichtmetallbauteil (3) mit dem Zusatzteil (2) verschweißt.

12. Verfahren nach Anspruch 11, **dadurch gekennzeichnet, daß** nach dem Verbinden von Stahlbauteil (1) mit Zusatzteil (2) und vor dem Verschweißen von Zusatzteil (2) mit Leichtmetallbauteil (3) das Zusatzteil (2) mit dem Leichtmetallbauteil (3) verklebt wird.

## Claims

1. Arrangement for connecting a light metal component (3) to a steel component (1) with the aid of an additional part (2) which extends partially between these two components, is welded to one of the two components (1, 3) and is secured to the other of the two components (1, 3) by connection means (4), **characterized in that** the additional part (2) consists of light metal or a light metal alloy, is welded to the light metal components (3) and is secured to the steel component (1) by mechanically acting connecting means (4) which are known per se, such as rivets, screws, clinch connections, the distance between the weld seam (5) and the selected connecting means (4) amounting to a multiple of the thickness of the additional part (2).

2. Arrangement according to Claim 1, **characterized in that** the rivets used as connecting means (4) are punch rivets.

3. Arrangement according to Claim 1, **characterized in that** the additional part (2) additionally has a surface-to-surface join to the light metal component (3) by means of an adhesively acting connecting means (4) in the form of an adhesive.

4. Arrangement according to Claim 3, **characterized in that** the adhesive used is preferably an adhesive marketed as AMV 167 or Sieker Power 430, or a window adhesive.

5. Arrangement according to one of the preceding claims, **characterized in that** the light metal component (3) is a motor-vehicle shaped roof.

6. Arrangement according to one of the preceding claims, **characterized in that** the steel component (1) is a side part (1) of a motor vehicle.

7. Arrangement according to one of the preceding claims, **characterized in that** the additional part (2) is welded to the light metal component (3) by means of a laser-welded seam.

8. Arrangement according to one of Claims 6 and 7, **characterized in that** the additional part (2) is designed as a narrow metal sheet which extends in the longitudinal direction of the vehicle, along a roof-receiving tongue (123) of the side part (1).

9. Arrangement according to one of Claims 6 to 8, **characterized in that** the additional part (2) is designed as a narrow metal sheet which extends in the transverse direction of the vehicle, along a receiving surface.

10. Arrangement according to one of the preceding claims, **characterized in that** the connecting joints between the additional part (2) and the light metal component (3) is sealed by means of a sealing compound.

11. Method for producing an arrangement according to Claim 1, **characterized by** the following method steps:
- the steel component (1) and the additional part (2) are connected to one another by riveting, screwing and/or clinching;
- the light metal component (3) is then welded to the additional part (2).

12. Method according to Claim 11, **characterized in that**, after the steel component (1) has been connected to the additional part (2) and before the additional part (2) is welded to the light metal component (3), the additional part (2) is adhesively bonded to the light metal component (3).

## Revendications

1. Agencement pour joindre une pièce en métal léger (3) à une pièce en acier (1) à l'aide d'une pièce additionnelle (2) qui s'étend en partie entre ces deux dernières, qui est soudée à une des deux pièces (1, 3) et qui est fixée à l'autre des deux pièces (1, 3) par des moyens d'assemblage (4), **caractérisé en ce que** la pièce additionnelle (2) se compose d'un métal léger ou d'un alliage de métal léger, **en ce qu'**elle est soudée à la pièce en métal léger (3) et **en ce qu'**elle est fixée à la pièce en acier (1) par des moyens d'assemblage à action mécanique connus en soi (4), comme des rivets, des vis, des assemblages clinch, la distance entre le cordon de soudure (5) et le moyen d'assemblage choisi (4) étant égale à un multiple de l'épaisseur de la pièce additionnelle (2).

2. Agencement suivant la revendication 1, **caractérisé en ce que** les rivets mis en oeuvre comme moyens d'assemblage (4) sont des rivets estampés.

3. Agencement suivant la revendication 1, **caractérisé en ce que** la pièce additionnelle (2) est en plus assemblée à plat à la pièce en métal léger (3) à l'aide d'un moyen d'assemblage (4) agissant par adhérence sous la forme d'une colle.

4. Agencement suivant la revendication 3, **caractérisé en ce que** la colle employée est de préférence une colle des marques AMV 167 ou Sieker Power 430 ou une rondelle de colle.

5. Agencement suivant l'une quelconque des revendications précédentes, **caractérisé en ce que** la pièce en métal léger (3) est un toit profilé de véhicule à moteur.

6. Agencement suivant l'une quelconque des revendications précédentes, **caractérisé en ce que** la pièce en acier (1) est une pièce latérale (1) d'un véhicule à moteur.

7. Agencement suivant l'une quelconque des revendications précédentes, **caractérisé en ce que** la pièce additionnelle (2) est soudée à la pièce en métal léger (3) au moyen d'un cordon de soudure au laser.

8. Agencement suivant l'une ou l'autre des revendications 6 et 7, **caractérisé en ce que** la pièce additionnelle (2) est constituée par une tôle étroite, qui s'étend dans le sens longitudinal du véhicule le long d'une patte de pose de toit (123) de la pièce latérale (1).

9. Agencement suivant l'une quelconque des revendications 6 à 8, **caractérisé en ce que** la pièce additionnelle (2) est constituée par une tôle étroite, qui s'étend dans le sens transversal du véhicule le long d'une face de pose.

10. Agencement suivant l'une quelconque des revendications précédentes, **caractérisé en ce que** le joint d'assemblage entre la pièce additionnelle (2) et la pièce en métal léger (3) est scellé avec une masse d'étanchéité.

11. Procédé pour la fabrication d'un agencement suivant la revendication 1, **caractérisé par** les étapes suivantes:
- la pièce en acier (1) et la pièce additionnelle (2) sont assemblées l'une à l'autre par rivetage, vissage et/ou assemblage clinch;
- la pièce en métal léger (3) est ensuite soudée à la pièce additionnelle (2).

12. Procédé suivant la revendication 11, **caractérisé en ce que** la pièce additionnelle (2) est collée à la pièce en métal léger (3) après l'assemblage de la pièce en acier (1) à la pièce additionnelle (2) et avant le soudage de la pièce additionnelle (2) à la pièce en métal léger (3).
